Europäisches Patentamt

European Patent Office

Office européen des brevets

(19)

(11) **EP 0 994 340 A1**

(12) **DEMANDE DE BREVET EUROPEEN**

(43) Date de publication:
**19.04.2000 Bulletin 2000/16**

(51) Int Cl.[7]: **G01N 21/35**

(21) Numéro de dépôt: **99402458.6**

(22) Date de dépôt: **07.10.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **16.10.1998 FR 9813013**

(71) Demandeur: **L'AIR LIQUIDE, SOCIETE ANONYME POUR L'ETUDE ET L'EXPLOITATION DES PROCEDES GEORGES CLAUDE**
**75321 Paris Cédex 07 (FR)**

(72) Inventeurs:
• **Bartolomey, Mélanie**
  **75011 Paris (FR)**
• **Girard, Jean-Marc**
  **75013 Paris (FR)**
• **Mauvais, Patrick**
  **78450 Villepreux (FR)**
• **McAndrew, james**
  **Illinois 60441 (US)**

(74) Mandataire: **Vesin, Jacques et al**
**L'AIR LIQUIDE, S.A.,**
**Service Propriété Industrielle,**
**75, Quai d'Orsay**
**75321 Paris Cédex 07 (FR)**

(54) **Procédé et dispositif de mesure de la quantité d'impuretés dans un échantillon de gaz à analyser**

(57) Ce procédé de mesure de la quantité d'impuretés dans un échantillon de gaz emplissant une cellule (12) d'analyse par spectroscopie d'absorption laser consiste à calculer la valeur d'une caractéristique représentative de l'absorbance de l'échantillon de gaz, à une pression donnée et quantifier les impuretés à partir d'une loi prédéterminée de variation de la caractéristique en fonction de la quantité d'impuretés. La caractéristique est constituée par une grandeur variant linéairement, à pression constante, en fonction de la quantité d'impuretés, les impuretés étant quantifiées à partir d'une valeur du coefficient de proportionnalité entre la quantité d'impuretés et la caractéristique, déterminée à partir d'une table de variations de ladite caractéristique en fonction de la pression, pour une quantité donnée d'impuretés.

FIG.1

EP 0 994 340 A1

## Description

La présente invention se rapporte à un procédé et à un dispositif permettant de mesurer la quantité d'impuretés présentes à l'état de trace dans un échantillon de gaz à analyser, et en particulier à un procédé et à un dispositif de mesure utilisant une technique d'analyse par spectroscopie d'absorption laser.

Elle est particulièrement adaptée pour la détection de la teneur en eau ou en vapeur d'eau des gaz utilisés classiquement dans le domaine de la fabrication de composants microélectroniques.

En effet, parmi les contaminants volatils, l'humidité apparaît comme étant la plus néfaste, en raison des interactions qu'elle peut développer avec les surfaces qu'elle est susceptible de rencontrer, ce qui la rend particulièrement difficile à éliminer. En outre, la présence d'eau dans des gaz réactifs peut entraîner de sérieux dommages dans les réseaux de distribution des gaz.

Il existe, à ce jour, plusieurs techniques permettant de mesurer la quantité d'humidité présente dans des gaz.

De telles techniques nécessitent généralement l'emploi d'équipements relativement coûteux et volumineux et sont d'une mise oeuvre relativement longue, ce qui limite fortement leur efficacité.

Une technique efficace pour la détection des traces de vapeur d'eau dans des gaz est constituée par la technique d'analyse par spectroscopie d'absorption laser infrarouge, également connue sous l'appellation "TDLAS".

Selon cette technique, l'échantillon de gaz à analyser est disposé dans une cellule d'analyse et est éclairé par de la lumière émise par une diode selon une longueur d'onde correspondant à la longueur d'onde à laquelle l'absorption de lumière par les impuretés est maximale.

Ainsi, pour la quantification des molécules d'eau présentes dans le gaz à analyser, le rayon laser est émis selon une longueur d'onde égale à 1,368 μ.

Selon la technique d'analyse par spectroscopie d'absorption laser, le rayon laser est divisé en deux faisceaux, à savoir un faisceau d'analyse qui traverse la cellule d'analyse et un faisceau de référence.

Chacun des faisceaux est ensuite détecté à l'aide de photodiodes.

La quantification proprement dite des molécules d'eau effectuée au moyen d'un analyseur fonctionnant selon cette technique est basée sur la loi de Beer-Lambert dont l'équation est la suivante :

$$I_{ana} = I_{ref} \times \exp(-K.N_{nH2O}.L) \qquad (1)$$

dans laquelle :

$N_{nH2O}$ représente la concentration en molécules d'impuretés,

$I_{ref}$ représente l'intensité du faisceau de référence à l'entrée de la cellule d'analyse,

$I_{ana}$ désigne l'intensité du faisceau d'analyse,

K désigne le coefficient de transmission moléculaire, qui dépend du type de gaz et de sa pression, et

L désigne le chemin optique parcouru par le faisceau d'analyse à travers la cellule.

Pratiquement, la quantification des molécules d'impureté nécessite une étape préalable de calibration de l'analyseur permettant de connaître la valeur du coefficient K, à la pression considérée et pour le type de gaz analysé, la concentration en impuretés étant ensuite évaluée à partir de la différence entre l'intensité du faisceau d'analyse et l'intensité du faisceau de référence.

L'étape de calibration préalable consiste, pour chaque type de gaz et pour une valeur de pression donnée, à définir le zéro de l'analyseur en analysant un gaz sec puis à élaborer une courbe de calibration en procédant à des ajouts dosés d'eau sur le gaz sec.

Une telle calibration, qui doit être effectuée périodiquement, est relativement longue et fastidieuse à mettre en oeuvre. Elle est en outre susceptible d'engendrer des erreurs dans la mesure où elle peut être sujette à de la pollution. En outre, l'analyseur doit être accompagné d'un montage spécifique pour la calibration, ce qui le rend relativement volumineux.

Le but de l'invention est de pallier ces inconvénients et de fournir un dispositif et un procédé de mesure de la quantité d'impuretés dans un échantillon de gaz capable de délivrer directement une mesure de la concentration en impuretés.

Elle a donc pour objet un procédé de mesure de la quantité d'impuretés dans un échantillon de gaz emplissant une cellule d'analyse par spectroscopie d'absorption laser, consistant à calculer la valeur d'une caractéristique représentative de l'absorbance de l'échantillon de gaz, à une pression donnée, et quantifier les impuretés à partir d'une loi prédéterminée de variation de la caractéristique en fonction de la quantité d'impuretés, caractérisé en ce que ladite caractéristique est constituée par une grandeur variant linéairement à pression constante en fonction de la quantité d'impuretés, les impuretés étant quantifiées à partir d'une valeur d'un coefficient de proportionnalité entre la quantité d'impuretés et la caractéristique, déterminée à partir d'une table de variation de ladite caractéristique en fonction de la pression, pour une quantité donnée d'impuretés.

Le procédé suivant l'invention peut en outre comporter une ou plusieurs des caractéristiques suivantes, prises isolément ou selon toutes les combinaisons techniquement possibles :

- ladite caractéristique est constituée par le rapport entre, d'une part, la différence entre l'intensité lumineuse du faisceau lumineux transmis à travers l'échantillon de gaz et l'intensité lumineuse du faisceau incident, et, d'autre part, l'intensité du faisceau incident ;

- le faisceau lumineux est émis au moyen d'une diode laser selon une plage de longueurs d'onde englobant la longueur d'onde à laquelle l'absorption de lumière par lesdites impuretés est maximale ;
- le faisceau lumineux émis par la diode est divisé en un premier faisceau d'analyse destiné à traverser la cellule et un faisceau de référence, l'intensité lumineuse du faisceau incident étant mesurée en mesurant l'intensité du faisceau de référence ;
- la table de variation de ladite caractéristique est élaborée pour différents types de gaz à analyser, en mesurant la valeur de ladite caractéristique à différentes pressions, pour un gaz contenant une quantité prédéterminée d'impuretés ;
- les impuretés comportent de l'eau ou de la vapeur d'eau ; et
- le gaz à analyser est choisi parmi des gaz utilisés dans le domaine de la fabrication de composants microélectroniques, tels que $NH_3$, HCl, HBr, HF, NO, $SiH_4$, $G_eH_4$ et les gaz perfluorocarbonés.

L'invention a également pour objet un dispositif de mesure de la quantité d'impuretés dans un échantillon de gaz pour la mise en oeuvre d'un procédé tel que défini ci-dessus, comprenant une diode laser destinée à émettre un faisceau de lumière selon une plage de longueurs d'onde englobant la longueur d'onde à laquelle l'absorption de lumière par lesdites impuretés est maximale, un organe séparateur de lumière adapté pour diviser le faisceau émis en un faisceau d'analyse destiné à être transmis à travers une cellule d'analyse par spectroscopie d'absorption laser emplie par l'échantillon gazeux à analyser, et en un faisceau de référence, des moyens photodétecteurs destinés à recevoir les faisceaux d'analyse et de référence et des moyens de calcul adaptés pour calculer la valeur d'une caractéristique variable linéairement en fonction de la quantité d'impuretés et représentative de l'absorbance de l'échantillon de gaz, à partir d'une comparaison entre l'intensité des faisceaux de mesure et de référence détectée par les moyens photodétecteurs, et en ce que les moyens de calcul comportent, stocké en mémoire, un ensemble d'au moins une table de variation de ladite caractéristique en fonction de la pression pour une quantité donnée d'impuretés en vue de l'élaboration, à partir de ladite table, du coefficient de proportionnalité à appliquer à la valeur calculée de ladite caractéristique pour l'obtention de la quantité d'impuretés.

Avantageusement, le dispositif comporte, stocké en mémoire, un ensemble de tables correspondant chacune à un type de gaz à analyser.

D'autres caractéristiques et avantages ressortiront de la description suivante, donnée uniquement à titre d'exemple, et faite en référence aux dessins annexés sur lesquels :

- la Figure 1 est une vue schématique d'un dispositif de mesure suivant l'invention ;
- la Figure 2 est une représentation schématique d'un hygromètre entrant dans la constitution du dispositif de la Figure 1 ; et
- la Figure 3 est une courbe montrant la variation, en fonction de la pression, de la caractéristique calculée pour la quantification des molécules d'eau présentes dans un échantillon de gaz.

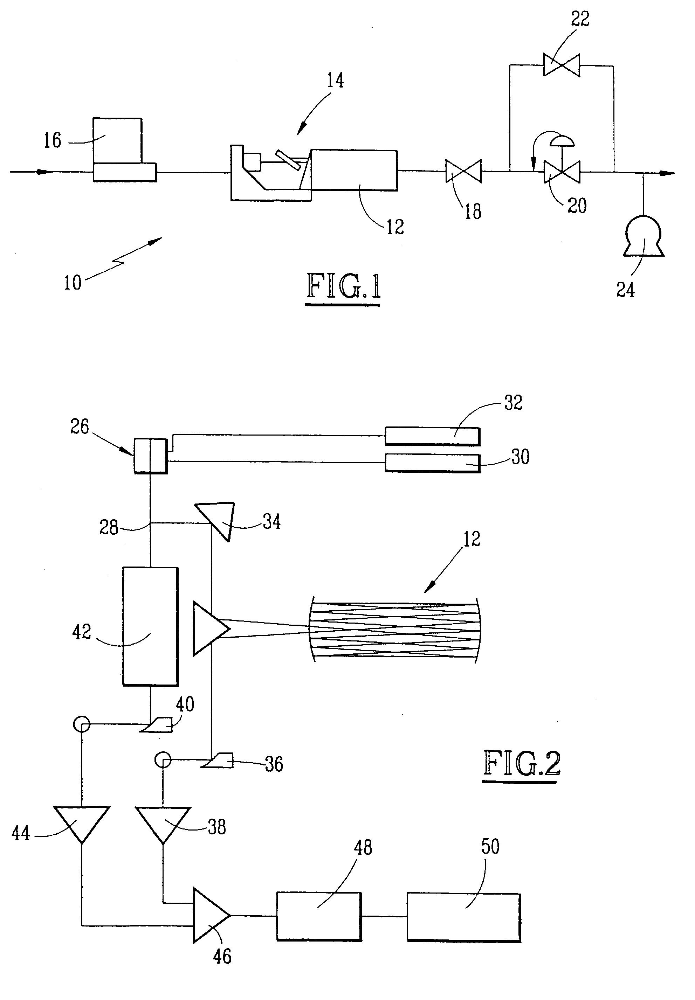

Sur la Figure 1, on a représenté un dispositif de mesure conforme à l'invention, désigné par la référence numérique générale 10.

Dans l'exemple de réalisation considéré, ce dispositif est destiné à quantifier des molécules d'eau présentes dans un échantillon de gaz à analyser emplissant une cellule d'analyse 12 d'un hygromètre 14.

Bien entendu, l'invention n'est pas limitée à la détermination de la teneur en humidité d'un gaz, mais s'applique également à l'analyse de tout autre type d'impuretés présentes à l'état de trace dans un échantillon de gaz et dont il convient de déterminer la teneur.

On voit sur la Figure 1 que le dispositif 10 comporte, en entrée, un régulateur de débit massique 16 permettant le réglage du débit de gaz fourni à l'hygromètre 14.

Le régulateur 16 est un régulateur de type classique adapté pour l'utilisation envisagée. Il ne sera donc pas décrit en détail par la suite.

L'hygromètre 14 est raccordé, en sortie, à un ensemble de vannes, à savoir une vanne d'arrêt 18 et une vanne de régulation de pression 20 disposée en série sur la vanne d'arrêt 18.

Un conduit de dérivation commandé par une deuxième vanne d'arrêt 22 s'étend de part et d'autre de la vanne de régulation 20.

Enfin, une pompe chimique 24 capable de contrôler la pression du gaz emplissant la cellule d'analyse 12, conjointement avec la vanne de régulation 20, est placée en sortie de cette dernière. La pompe 24 est également une pompe de type classique et ne sera donc pas décrite en détail par la suite.

On notera toutefois qu'elle est par exemple capable de réguler, conjointement avec la vanne de régulation 20, la pression dans la cellule d'analyse 12, dans une plage s'étendant de 50 mbars à 500 mbars.

En référence à la Figure 2, sur laquelle la cellule d'analyse 12 a été schématiquement représentée, l'hygromètre 14 comporte une diode laser 26 émettant un faisceau lumineux en direction d'un organe séparateur de lumière 28 selon une plage de longueur d'onde englobant la longueur d'onde à laquelle l'absorption de lumière par les molécules d'eau est maximale, c'est-à-dire 1,368 µm.

La diode 26 est raccordée à un dispositif de contrôle de température 30, en vue de maintenir constante la température de la diode, ainsi qu'à un dispositif de contrôle 32 du courant d'alimentation de la diode adapté pour fournir un courant d'alimentation en forme de dents de scie de manière à provoquer l'émission d'un rayonnement selon une plage de longueurs d'onde englobant la longueur d'onde à laquelle l'absorption de lumière par les impuretés à quantifier est maximale.

Un premier faisceau, constituant un faisceau de mesure, est dirigé, à l'aide de miroirs tels que 34, vers la cellule 12 dans laquelle elle circule selon de nombreux trajets.

Le faisceau lumineux délivré en sortie de la cellule 12 est détecté au moyen d'un premier photodétecteur 36 raccordé en sortie à un amplificateur 38.

Par ailleurs, la deuxième partie du faisceau divisé, constituant un faisceau de référence, est détecté par un deuxième photodétecteur 40 après passage au travers d'un dispositif de réglage de chemin optique 42, de manière à rendre identiques les chemins optiques du faisceau de mesure et du faisceau de référence.

Le signal délivré par le deuxième photodétecteur 40 est ensuite amplifié au moyen d'un deuxième amplificateur 44.

Les signaux délivrés en sortie des premier et deuxième amplificateurs 38 et 44 sont ensuite présentés en entrée d'un comparateur 46 pour être comparés puis en entrée d'un filtre passe-bande 48, de manière à éliminer les bruits de mesure.

On voit enfin sur cette Figure 2 que le filtre 48 est raccordé à une unité de traitement 50 adaptée pour calculer, à partir de la différence mesurée entre l'intensité du faisceaux d'analyse et l'intensité du faisceau de référence, la concentration en molécules d'eau présentes dans l'échantillon de gaz analysé.

Pour ce faire, l'unité de traitement 50 élabore une caractéristique représentative de l'absorbance de l'échantillon de gaz, variant linéairement à pression constante en fonction de la quantité des molécules d'eau du gaz, et dont la variation en fonction de la pression, pour une quantité fixe de molécules d'impureté est connue.

Cette variation en fonction de la pression est donnée sous la forme d'un ensemble de tables, stockées en mémoire, correspondant chacune à un type de gaz capable d'être analysé par l'hygromètre 14, et donnant la variation de la caractéristique en fonction de la pression, pour une quantité donnée d'impuretés.

La caractéristique élaborée est constituée par le rapport entre, d'une part, la différence entre l'intensité du faisceau d'analyse et l'intensité du faisceau de référence et, d'autre part, l'intensité du faisceau de référence.

En effet, en se référant à nouveau à la loi de Beer-Lambert mentionnée précédemment et donnée par la relation (1), et en tenant compte des grandeurs mesurées, particulièrement faibles, cette loi peut être approximée par la relation suivante en utilisant des développements limités du premier ordre :

$$\frac{I_{ana} - I_{ref}}{I_{ref}} = K.N_{nH20}.L \qquad (2)$$

Par ailleurs, en tenant compte de la concentration en molécules d'eau du gaz échantillon et de la loi des gaz parfaits, la relation définie ci-dessus peut être modifiée de la façon suivante :

$$\frac{I_{ana} - I_{ref}}{I_{ref}} = K.L.n_{ppb}.10^{-9} \times \frac{PV}{kT} \qquad (3)$$

dans laquelle :

k désigne la constante de Boltzman,
$n_{ppb}$ désigne la teneur en ppb des molécules d'eau,
V désigne le volume de la cellule 12 de mesure; et
T désigne la température du gaz.

On notera que la longueur du chemin optique L, ainsi que le volume intérieur de la cellule d'analyse sont fixés une fois pour toutes par construction de l'appareil. De plus, la température de la cellule d'analyse 12 est maintenue constante au moyen du dispositif de contrôle de température 30.

Dans ces conditions, pour un type de gaz donné et pour une pression donnée, le quotient $(I_{ana} - I_{ref})/I_{ref}$ est directement proportionnel à la concentration en vapeur d'eau, et est totalement indépendant de tout paramètre externe qui pourrait altérer le signal délivré par le comparateur 46.

Pour la quantification des molécules d'impuretés, l'unité de traitement 50 extrait des tables mémorisées la valeur de la caractéristique correspondant à la pression P d'analyse, cette valeur constituant, au rapport du nombre de molécules d'impuretés près, la valeur du coefficient de proportionnalité entre la quantité d'impuretés à déterminer et la valeur de la caractéristique $\Delta I/I_0$ calculée au cours de l'analyse.

C'est-à-dire, pour la détermination de la valeur du coefficient de proportionnalité, il convient de diviser la valeur extraite des tables par la quantité d'impureté contenu dans l'échantillon gazeux utilisé pour l'élaboration des tables.

Ainsi, dans la mesure où la caractéristique calculée au cours de l'analyse varie linéairement en fonction de la concentration en impuretés, cette dernière peut être obtenue directement à partir du coefficient de proportionnalité extrait des tables.

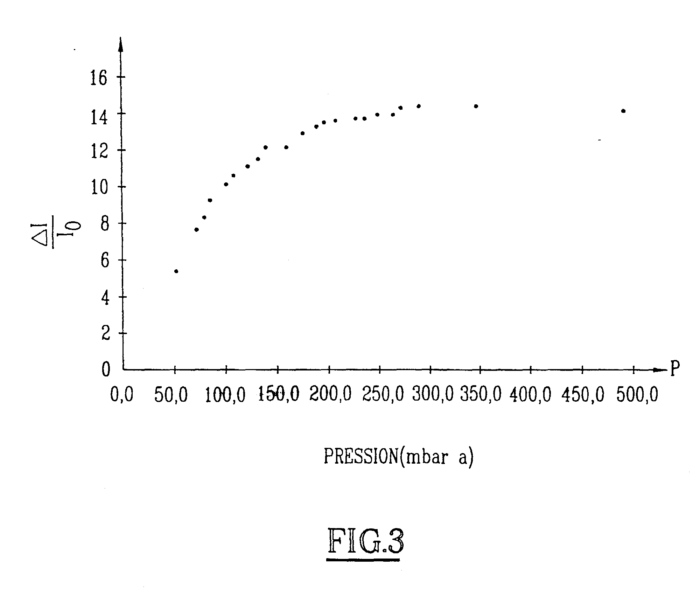

On a représenté sur la figure 3 la variation, en fonction de la pression et pour une quantité donnée d'impuretés, du rapport $(I_{ana} - I_{ref})/I_{ref}$ permettant d'élaborer le coefficient de proportionnalité appliqué à la caractéristique calculée au cours de l'analyse pour obtenir la valeur de la concentration en impuretés présentes dans la cellule d'analyse 12.

On conçoit donc que l'invention qui vient d'être décrite permet d'obtenir relativement directement la valeur de la concentration en impuretés d'un échantillon gazeux, sans avoir à procéder à une étape préalable de calibration de l'analyseur, dans la mesure où les tables sont utilisées pour toutes les analyses portant sur un même gaz.

En effet, l'utilisateur, connaissant la pression d'analyse du gaz, peut évaluer la teneur en vapeur d'eau de son échantillon par simple consultation de ces tables et, le cas échéant, par un rapide calcul, consistant à diviser le résultat obtenu par la concentration en impuretés utilisée pour élaborer les tables.

## Revendications

1. Procédé de mesure de la quantité d'impuretés dans un échantillon de gaz emplissant une cellule (12) d'analyse par spectroscopie d'absorption laser, consistant à calculer la valeur d'une caractéristique représentative de l'absorbance de l'échantillon de gaz, à une pression donnée, et quantifier les impuretés à partir d'une loi prédéterminée de variation de la caractéristique en fonction de la quantité d'impuretés, caractérisé en ce que ladite caractéristique est constituée par une grandeur variant linéairement à pression constante en fonction de la quantité d'impuretés, les impuretés étant quantifiées à partir d'une valeur du coefficient de proportionnalité entre la quantité d'impuretés et la caractéristique, déterminée à partir d'une table de variation de ladite caractéristique en fonction de la pression, pour une quantité donnée d'impuretés.

2. Procédé selon la revendication 1, caractérisé en ce que ladite caractéristique est constituée par le rapport entre, d'une part, la différence entre l'intensité lumineuse ($I_{ana}$) d'un faisceau lumineux transmis à travers le gaz et l'intensité lumineuse ($I_{ref}$) du faisceau incident et, d'autre part, l'intensité lumineuse ($I_{ref}$) du faisceau incident.

3. Procédé selon la revendication 2, caractérisé en ce que le faisceau lumineux est émis au moyen d'une diode laser (26) selon une plage de longueurs d'onde englobant la longueur d'onde à laquelle l'absorption de lumière par les impuretés est maximale.

4. Procédé selon la revendication 3, caractérisé en ce que l'intensité lumineuse incidente est mesurée en divisant le faisceau lumineux émis par la diode laser (26) en un faisceau d'analyse destiné à être transmis à travers l'échantillon de gaz et un faisceau de référence, et en mesurant l'intensité ($I_{ref}$) du faisceau de référence.

5. Procédé selon l'une quelconque des revendications 1 à 4, caractérisé en ce que la table de variation de ladite caractéristique est élaborée pour différents types de gaz à analyser en mesurant la valeur de ladite caractéristique à différentes pressions, pour un gaz contenant une quantité prédéterminée d'impureté.

6. Procédé selon l'une quelconque des revendications 1 à 5, caractérisé en ce que lesdites impuretés comportent de l'eau ou de la vapeur d'eau.

7. Procédé selon l'une quelconque des revendications 1 à 6, caractérisé en ce que le gaz à analyser est choisi parmi des gaz utilisés dans le domaine de la fabrication de composants microélectroniques, tels que $NH_3$, HCl, HBr, $HF, NO, SiH_4, GeH_4$ et les gaz perfluorocarbonés.

8. Dispositif de mesure de la quantité d'impuretés dans un échantillon gazeux, pour la mise en oeuvre d'un procédé de mesure selon l'une quelconque des revendications 1 à 7, caractérisé en ce qu'il comporte une diode laser (26) destinée à émettre un faisceau de lumière selon une plage de longueurs d'onde englobant la longueur d'onde à laquelle l'absorption de lumière par lesdites impuretés est maximale, un organe (28) séparateur de lumière adapté pour diviser le faisceau émis en un faisceau d'analyse destiné à être transmis à travers une cellule (12) d'analyse par spectroscopie d'absorption laser emplie par l'échantillon gazeux à analyser, et en un faisceau de référence, des moyens photodétecteurs (36, 40) destinés à recevoir les faisceaux d'analyse et de référence et des moyens de calcul (50) adaptés pour calculer la valeur d'une caractéristique variable linéairement en fonction de la quantité d'impuretés et représentative de l'absorbance de l'échantillon de gaz, à partir d'une comparaison entre l'intensité des faisceaux de mesure et de référence détectée par les moyens photodétecteurs, et en ce que les moyens de calcul (50) comportent, stocké en mémoire, un ensemble d'au moins une table de variation de ladite caractéristique en fonction de la pression, pour une quantité donnée d'impuretés, en vue de l'élaboration, à partir de ladite table, du coefficient de proportionnalité à appliquer à la valeur calculée de ladite caractéristique pour l'obtention de la quantité d'impuretés.

9. Dispositif selon la revendication 8, caractérisé en ce qu'il comporte, stocké en mémoire, un ensemble de tables correspondant chacune à un type de gaz à analyser.

FIG.1

FIG.2

FIG.3

**Office européen des brevets**

**RAPPORT DE RECHERCHE EUROPEENNE**

Numéro de la demande

EP 99 40 2458

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 509 249 A (FRESENIUS INST) 21 octobre 1992 (1992-10-21) * abrégé * | 1 | G01N21/35 |
| Y | * page 5, ligne 17 - ligne 32 * * page 6, ligne 4 - ligne 10 * * revendication 6 * | 2-8 | |
| Y | US 5 821 537 A (MATSUMOTO KOH ET AL) 13 octobre 1998 (1998-10-13) * abrégé * | 2-8 | |
| A | * colonne 3, ligne 8 - ligne 13 * * colonne 6, ligne 64 - colonne 7, ligne 6 * * colonne 8, ligne 38 - ligne 45 * * colonne 9, ligne 8 - ligne 10 * * colonne 10, ligne 1 - ligne 15 * * colonne 10, ligne 25 - ligne 32 * * figure 4 * | 1,9 | |
| A | US 5 506 685 A (GRASDEPOT FRANCOIS) 9 avril 1996 (1996-04-09) * abrégé * * figure 1 * | 2 | DOMAINES TECHNIQUES RECHERCHES (Int.Cl.7) G01N |
| A | EP 0 387 684 A (PERKIN ELMER CORP) 19 septembre 1990 (1990-09-19) * abrégé * * colonne 2, ligne 34 - ligne 41 * * colonne 4, ligne 49 - colonne 5, ligne 6 * * colonne 5, ligne 22 - ligne 57 * * colonne 6, ligne 17 - ligne 28 * * figure 1 * | 1 | |

Le présent rapport a été établi pour toutes les revendications

| Lieu de la recherche | Date d'achèvement de la recherche | Examinateur |
|---|---|---|
| LA HAYE | 22 décembre 1999 | Verdoodt, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**　　　　EP 99 40 2458

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-12-1999

| Document brevet cité au rapport de recherche | | Date de publication | Membre(s) de la famille de brevet(s) | | Date de publication |
|---|---|---|---|---|---|
| EP 0509249 | A | 21-10-1992 | DE | 4112356 A | 22-10-1992 |
| | | | CA | 2064540 A | 17-10-1992 |
| | | | CS | 9201132 A | 16-12-1992 |
| | | | HU | 66169 A | 28-09-1994 |
| | | | JP | 5249040 A | 28-09-1993 |
| | | | RO | 109899 A | 30-06-1995 |
| | | | RU | 2095789 C | 10-11-1997 |
| US 5821537 | A | 13-10-1998 | EP | 0706042 A | 10-04-1996 |
| | | | WO | 9526497 A | 05-10-1995 |
| | | | JP | 2587214 B | 05-03-1997 |
| | | | US | 5703365 A | 30-12-1997 |
| US 5506685 | A | 09-04-1996 | FR | 2716973 A | 08-09-1995 |
| | | | AT | 175775 T | 15-01-1999 |
| | | | DE | 69507176 D | 25-02-1999 |
| | | | DE | 69507176 T | 22-07-1999 |
| | | | EP | 0670487 A | 06-09-1995 |
| | | | ES | 2127955 T | 01-05-1999 |
| EP 0387684 | A | 19-09-1990 | US | 4975582 A | 04-12-1990 |
| | | | CA | 2010868 A | 16-09-1990 |
| | | | DE | 69019569 D | 29-06-1995 |
| | | | DE | 69019569 T | 28-09-1995 |
| | | | JP | 3202755 A | 04-09-1991 |

EPO FORM P0460